# EUROPEAN PATENT SPECIFICATION

(11) **EP 1 961 978 B1**
(45) Date of publication and mention of the grant of the patent: **24.12.2014**
(21) Application number: 06821977.3
(22) Date of filing: 20.10.2006
(51) Int. Cl.: F16B 39/284, F16B 39/30

(54) **LOOSENING PREVENTIVE FASTENER FOR SCREW TOOL, AND METHOD AND DEVICE FOR MANUFACTURING THE SAME**
EIN LOCKERN VERHINDERNDES BEFESTIGUNGSELEMENT FÜR SCHRAUBWERKZEUG UND VERFAHREN UND VORRICHTUNG ZUR HERSTELLUNG DESSELBEN
ATTACHE ANTI-RELACHEMENT POUR OUTIL A VIS, PROCEDE ET DISPOSITIF POUR SA FABRICATION

(30) Priority: 18.11.2005 JP 2005333796
(43) Date of publication of application: 27.08.2008
(73) Proprietor: Totsu, Katsuyuki, Tokyo 131-0045 (JP)
(72) Inventor: Totsu, Katsuyuki, Tokyo 131-0045 (JP)
(74) Representative: Hoffmann Eitle
(86) International application number: PCT/JP2006/320916
(87) International publication number: WO 2007/058049

(56) References cited:
- FR-A- 1 549 506
- GB-A- 1 267 144
- JP-A- 59 023 117
- JP-A- 2001 304 219
- JP-A- 2002 307 561
- JP-U- 54 029 265
- US-A- 3 139 636
- US-A- 3 391 721
- US-A- 4 768 908

## Description

### Technical Field

The present invention relates to a fastener such as an insert, spacer, or nut or the like used for effecting fastening with screw tool such as a screw or bolt, and more particularly to a fastener in which a screw tool screwed into and secured to the fastener can be easily and assuredly prevented from loosening or coming off, and further relates to a manufacturing method and manufacturing apparatus of such a fastener.

### Background Technology

GB 1 267 144 A describes a tamper-proof two-way locknut. In the nut, an annular coining groove is provided substantially midway between the ends of the nut. Further, thread lock deformations are provided at the intersections of slots with the annular groove.

US 3,391,721 A relates to an insert having an integral internal thread lock and a method of making the same. A generally tubular body may be provided with a plurality of external depressions. The external depressions may be provided in form of a continuous depression which completely encircles the body.

US 3,139,636 A describes a method of displacing a thread portion to produce a lock thread. In the method, pitch discontinuities may be formed by utilizing intending dies effective to form hipped-shaped recesses.

Conventionally, when a screw tool such as screws or bolts are combined with fasteners such as nuts or inserts used for screwing and securing them, the screw tool screwed and secured to the fastener develops loosening caused by vibration or the like, and sometimes even comes completely off. From this perspective, conventionally, in combinations of screw tool and fasteners, various loosening-prevention methods and means, respectively, have been proposed and implemented for a screw tool and a fastener.

In early proposals, for example, there have been many innovations proposed, in which concavities are provided for the inner circumferential walls of nuts or through holes are provided from the outer circumferential walls, or the like, into which concavities or through holes elastic members are inserted so that they will not fall out, and, by providing configurations in which the tip surfaces of the elastic members are attached tightly in the threads of the bolts, loosening of the screw tool can be prevented.

Innovations have also been proposed in which, in a combination of a screw tool and a fastener, a resin is applied to the surface of the threads of the screw tool or fastener, so that the screw tool can be prevented from loosening by such *properties* of the resin as elasticity, friction, viscosity, and adhesiveness.

However, in the various loosening preventive means previously proposed, it is necessary to add complex processes when manufacturing them, making it very difficult to reduce manufacturing costs by mass production. Furthermore, it is being increasingly demanded that the screw tool and fasteners used in the assembly of various products that today are being made smaller and smaller exhibit greater fineness and precision, making it very difficult structurally to adopt the various loosening preventive means conventionally proposed for these types of screw tools and fasteners, and, naturally, the implementation thereof during manufacture is also very difficult.

From such a perspective, self-tapping thermoplastic resin insert parts, and a manufacturing method therefor, have been proposed (cf. Patent Literature 1), in which, for example, a self-tapping thermoplastic resin insert part is mounted in a lower die, the upper die is closed, and a molded cavity is formed by the upper die and lower die, after which a thermosetting resin is injected into the above-described cavity, and the insert part and thermosetting resin are integrally molded to form the self-tapping thermoplastic resin insert part. In other words, for the self-tapping thermoplastic resin insert part described in Patent Literature 1, it is disclosed that, by integrally molding the thermosetting resin, a benefit is realized in that it is possible to sharply improve repeated tightening, pull-out force, pull-out torque, and tightening force for internal threads.

Furthermore, a return preventing method for a internal thread body has been proposed (cf. Patent Literature 2) that uses an enveloped internal thread body in which a tubular outer covering member (thin material made of synthetic resin exhibiting a shrinking property) is mounted on the outer periphery of the internal thread body or on a holding body protrudingly provided at an outer face part of the internal thread body. The outer covering member contracts to adhere closely to the outer periphery of the internal thread body or the holding body of the internal thread body, and one side part in the outer covering member is contracted so as to have a smaller diameter than a root diameter in the internal thread on the internal thread body bearing surface side or on the other side, thus forming a locking part that protrudes in a specified length and engages the male thread of an external thread body. By screwing the internal thread body to the external thread body, after firmly fastening an article, or before screwing, a covering layer (setting resin or resinous coating or the like) is formed on the inner circumference or outer circumference of the locking part in the outer covering member, so that the internal thread member is prevented from returning.

More specifically, in the enveloped internal thread body and an internal thread body return prevention method described in Patent Literature 2, various benefits are disclosed, including that, when fastening an article, the locking part formed by the outer application of the outer covering member to the internal thread body engages the external threads of the external thread body, so that the external thread body and the internal thread body are made integral, so that a large return preventive effect can be manifested; and further, by providing a covering layer in the locking part, the opening of this locking part when screwing in the external threads is suppressed, and deterioration due to exterior factors can be prevented, and, furthermore, the internal thread body return preventing action can be continued as much as possible.

Furthermore, in a structure in which a piece being attached that has a fastening hole provided with countersinking at the top thereof is fastened and secured to a piece being attached to, a metal collar and a fastening structure using this metal collar have been proposed (cf. Patent Literature 3) in which this metal collar is a metal collar that is mounted inside the fastening hole of the above-described piece being attached, and the configuration is such that the total length of the metal collar is formed so as to be longer than the length of the fastening hole, and such that one portion corresponding to the countersinking is elastically deformed inside the countersinking *by* pressure applied from the long direction.

In other words, with respect to the metal collar and the fastening structure using this metal collar described in this Patent Literature 3, what is disclosed is that the metal collar is compression-deformed inside the countersinking provided in the fastening hole in the piece being attached, so that imparting a reaction force to the above-described fastening means, that is, that an energizing force is applied to the fastening member(s) by the elastic return force (spring-back force) at the insertion end of the metal collar that is buckle deformed, and as a result, the benefit of being able to stop the loosening of the fastening member(s) is realized.

Furthermore, a loosening preventive internal thread structure and manufacturing method therefor have been proposed (cf. Patent Literature 4) in which, of the inlet end and outlet end where internal threads are screwed to a external thread member, the outlet end is given a reduced diameter, making a tapered shape, about the entire circumference, so that the inner diameter of the internal threads becomes smaller than the intermediate part, to form internal threads of reduced diameter having a conical cross-section, and, for irregularities for repeatedly continuing the thread crests of these reduced-diameter internal threads in the circumferential direction, they are formed so that the convex parts thereof protrude on the center side of the reduced-diameter internal threads, and so that the concave parts thereof retract from the center side of the reduced-diameter internal threads, so that, when the external thread member is screwed to these internal threads, the plurality of convex parts of the irregularities in the thread crests of the reduced-diameter internal threads presses against the roots and thread flank surfaces of the external thread member, so that when elastically compressed by the reaction thereof, the external thread member is tightened from the outer circumference.

More specifically, in the loosening preventive internal thread structure and manufacturing method therefor described in this Patent Literature 4, the reduced-diameter internal threads having a conical cross-section are formed by way of reducing the diameter in a tapered shape about the entire circumference, so that the inner diameter of the internal threads of the outlet end is smaller than the intermediate part. Accordingly, it is difficult for variation in internal thread deformation to appear, as in a case that a pressing force is applied to a part of the entire circumference to cause deformation; and further, irregularities are formed which repeatedly continue in the circumference direction of the thread crests of the internal threads of reduced diameter, and the convex parts of these irregularities make contact uniformly, about the entire circumference, with the threads of the external thread member. As a result, friction can be reduced, when viewed locally, compared to a conventional case in which pressure is applied to the entire circumference of thread crests, and *burning* does not readily occur; and further, because the tightening force acts uniformly over substantially the entire circumference due to the convex parts of the irregularities that continuously repeat, the loosening preventive effect is great.

Furthermore, a loosening preventive nut and manufacturing method therefor have been proposed (cf. Patent Literature 5) in which the loosening preventive nut is one that is screwed to a external screw tool such as a bolt, for fastening a member to be secured, and this nut comprises: a main nut body, an extension that is extended coaxially with the main nut body, a main internal thread part formed on the inner circumferential wall of the main nut body, a ring-shaped channel formed either in the inner circumferential wall on the main nut body side of the extension or in the inner circumferential wall of the main nut body, with a diameter that is either the same as or larger than the root diameter of the main internal thread part, and an auxiliary internal thread part formed on the inner circumferential wall of the extension with the phase relative to the main internal thread part displaced 12 to 100° but preferably 24 to 90° and more preferably 24 to 72°.

In other words, in the loosening preventive nut and manufacturing method therefor described in this Patent Literature 5, the loosening preventive nut is of a simple structure that exhibits outstanding amenability to mass production, decreases in screw-fastening force, when an external force acts on a bolt or member to be fastened to or the like, can be prevented, a large fastening force can be maintained almost indefinitely, the safety of the fastening of the member to be fastened to can be sharply enhanced, the fastening operation is easy, and repeat usability is outstanding.

Patent Literature 1: Japanese Patent Application Laid-Open No. 3-244814
Patent Literature 2: Japanese Patent Application Laid-Open No. 10-184650
Patent Literature 3: Japanese Patent Application Laid-Open No. 11-101218
Patent Literature 4: Japanese Patent Application Laid-Open No. 11-37129
Patent Literature 5: Japanese Patent Application Laid-Open No. 2004-3587

### Disclosure of Invention

### Problems the Invention Resolves

There is a trend today in which various industrially produced products, such as electrical appliances, are becoming smaller and smaller in conjunction with the miniaturization of electronic components and other components. Accordingly, when it comes to a screw tool and a fastener and the like used in assembling these various industrially produced products, there is a demand that they be precision-machined, and that their dimensions be made smaller and finer.

From such a perspective, looking at the conventional loosening preventive means for a screw tool and a fastener and the like described in the foregoing, for those in which a concavity or through hole is provided and an elastic member is mounted, when precision machining is required, or they must be made very small or very fine, not only is the manufacturing thereof very difficult, but they are also extremely problematic structurally.

Furthermore, in a screw tool in which a resin or the like exhibiting the *properties* of elasticity, friction, viscosity, and adhesiveness and the like is applied to its thread surface, there are such difficulties that powder from the resin or the like developing due to friction during the use thereof moves or flies about, or that reuse is not possible due to deterioration of the resin or the like; and furthermore, it is also very difficult to manufacture such a screw tool when it is made very small or very fine, as noted earlier, by precision machining.

In the insert parts disclosed in the above-described Patent Literature 1, on the other hand, a self-tapping thermoplastic resin material is used, in which, in view of the properties of the base materials used, there are limitations on the objects to which they are applied, and, for a screw tool or a fastener made very small or very fine for use in the assembly of various miniaturized products as described above, there are structural difficulties in manufacturing these by precision machining.

Moreover, the jacketed internal threaded bodies disclosed in the above-described Patent Literature 2 are configured such that an outer covering member comprising a thin material made of a synthetic resin exhibiting a shrinking property is externally coated, and the outer covering member is shrunk by applying heat to a locking part engaged in the external threads, heightening the tight attachment to the surfaces of the external threads of the locking part. As a result, similarlyas described above, for screw tools or fasteners that are made very small or very fine, there are structural difficulties with manufacturing them by precision machining, and there are also difficulties in that complexities arise in their manufacture and use.

In the metal collar and the fastening structure using this metal collar disclosed in the above-described Patent Literature 3, furthermore, for the object of bolt attachment, it is necessary to provide a fastening hole at the top where countersinking is provided, the configuration being made such that the total length of the metal collar is formed longer than the length of the fastening hole, and compression deformation is effected inside the countersinking. In this case as well, as described above, for a screw tool or a fastener made very small or very fine for use in the assembly of various miniaturized products as described above, there are structural difficulties in manufacturing these by precision machining, and there is a difficulty in that the method of use becomes particularly complex.

Furthermore, in the loosening preventive internal thread structure and manufacturing method therefor disclosed in the above-described Patent Literature 4, at the outlet end where the internal threads are screwed to the external thread member, the diameter is reduced in a tapered shape about the entire circumference so that the inner diameter of the internal threads becomes smaller than the intermediate part, to form reduced-diameter internal threads having a conical cross section, and irregularities are formed which repeatedly continue in the circumference direction relative to the thread crests of these reduced-diameter internal threads. In view of the fact that the shape and structure of the above-described continuing irregularities become extremely complex as described above, it is very difficult to manufacture screw tools or fasteners that are very small or very fine so as to be used in the assembly of various miniaturized products.

Moreover, in the loosening preventive nut and manufacturing method therefor disclosed in the above-described Patent Literature 5, a ring-shaped channel, having a diameter that is either the same as or larger than the root diameter of the main internal thread part, is formed either in the inner circumferential wall of the main nut body or in the inner circumferential wall on the main nut body side of the extension provided coaxially with the main nut body, and an auxiliary internal thread part formed in the inner circumferential wall of the extension is configured such that a prescribed phase displacement develops relative to the main internal thread part. Because the shape and structure of the ring-shaped channel become extremely complex, it is very difficult to manufacture, by precision machining, screw tools or fasteners that are very small or very fine so as to be used in the assembly of various miniaturized products.

In view of the above, the inventors of the present application succeeded in developing a fastener for preventing loosening of a screw tool, as well as a manufacturing method and manufacturing apparatus therefor, in which the screw tool or fastener is very small or very fine and precision-machined so as to be used particularly in the assembly of various miniaturized products, has a simple structure, is easy to manufacture, and makes the costs associated with mass production lower.

Aspects of the present invention are defined in claims 1 and 2 below. More specifically, the present invention relates to a fastener, such as an insert, or spacer is fastened with a screw tool such as a screw or bolt; and in this fastener, a concavity is provided in a part of the outer circumferential wall by pressure-forming from the outside, and a reduced-diameter deformation part, in which the diameter of the crests or roots of the internal threads in the inner circumferential wall of the fastener is partially reduced, is provided. The fastener is simple in structure, manufacture thereof is easy, and it can be mass-produced to effect the cost reductions; and further it is a very small and very fine fastener made by precision machining so as to be used particularly in assembling various miniaturized products. It was confirmed that the fastener is able to accomplish prevention of loosening of a screw tool easily and definitely.

Accordingly, an object of the present invention is to provide a loosening preventive fastener for screw tool therefor, in which the structure of the loosening preventive fastener for screw tool is comparatively simple, manufacture thereof is easy, and it is possible to effect the cost reductions associated with mass production, so that the fastener is for a screw tool that is made very small or very fine by precision machining and is used particularly in the assembly of various miniaturized products, and further the fastener is able to easily and definitely prevent loosening of a screw tool.

### Means for Resolving the Problems

In order to attain the object stated above, the loosening preventive fastener for screw tool of the present invention has the features as defined in claims 1 and 2 below. the fastener is configured so that it is a fastener such as an insert, or spacer for making fastening with a screw tool such as a screw or bolt. A concavity pressure-formed from the outside is provided in a part of the outer circumferential wall of the fastener, and a reduced-diameter deformation part in which the diameter of the crests or roots of the internal threads in the inner circumferential wall of the fastener is partially reduced is provided.

The loosening preventive fastener for screw tool of the present invention is configured such that a thinly formed portion of a prescribed width and made thinner entirely or partially in the circumferential direction thereof is provided in a part of the outer circumferential wall of the fastener, and a concavity pressure-formed from the outside is provided at least in a part of this thinly formed portion, and the reduced-diameter deformation part in which the diameter of the crests or roots of the internal threads in the inner circumferential wall of the fastener is partially reduced is provided.

The loosening preventive fastener for screw tool of the present invention is formed with a plurality of concavities pressure-formed in the outer circumferential wall of the fastener so as to be displaced in the axial direction of the fastener, and thus a plurality of reduced-diameter deformation parts are provided in the inner circumferential wall of the fastener.

The method for manufacturing a loosening preventive fastener for screw tool comprises the step of forming, in a part of the outer circumferential wall of a fastener such as an insert, or spacer that fastens with a screw tool such as a screw or bolt, a concavity that is pressure-formed at a part of the outer circumferential wall from outside of the fastener, so that the diameter of the internal thread crests or roots in the inner circumferential wall of the fastener is partially deformed to be reduced.

In the method for manufacturing a loosening preventive fastener for screw tool, when pressure-forming the concavity in a part of the outer circumferential wall from outside the fastener, pressure forming is effected by rolling dies that are provided with a convexity for forming the concavity.

In the method for manufacturing a loosening preventive fastener for screw tool, when providing the thinly formed portion in a part of the outer circumferential wall of the fastener, pressure forming is effected by rolling dies that are provided with a protruding ledge for forming the thinly formed portion and a convexity for forming the concavity.

An apparatus for manufacturing a loosening preventive fastener for screw tool is described. The apparatus comprises a fastener manufacturing apparatus and a concavity forming means, wherein the fastener manufacturing apparatus continuously manufactures fasteners such as inserts, spacers, and nuts that fastens with a screw tool such as screws or bolts, and the concavity forming means comprises rolling dies for pressure-forming, from the outside of the fastener, a concavity in a part of the outer circumferential wall of the fastener, thus pressure-forming a reduced-diameter deformation part in which a diameter of the crests or roots of the internal threads in the inner circumferential wall of said fastener is partially reduced.

A method for utilizing a loosening preventive fastener for screw tool is described. In the method, a screw tool, which is for preventing loosening and dropping away formed by applying a resin or the like partially or entirely to its external thread portion, and the loosening preventive fastener for screw tool, which is described above, are combined.

### Benefits of Invention

According to the loosening preventive fastener for screw tool of the present invention, it is a screw tool fastener made very small and very fine by precision machining, particularly used in the assembly of various miniaturized products, and it has a comparatively simple structure, is easy to manufacture, and realizes the lower costs associated with mass production; and preventing of a screw tool from loosening can be easily and definitely accomplished.

Furthermore, for the loosening preventive fastener for screw tool of the present invention, an ordinary screw tool can be used; and upon mating of the fastener with the screw tool, neither parts are damaged, and as a result, it is possible to reuse both the screw tool and the fastener repeatedly.

In particular, in the loosening preventive fastener for screw tools of the present invention, the diameter of the crests of the internal threads (the same being true of the roots thereof) in the inner circumferential wall of the fastener is set so that the radius r' of the reduced-diameter deformation part 20 relative to the prescribed radius r is made smaller (r > r'); accordingly, when the fastener is screwed together with a screw tool, the external threads of the screw tool will be pressure-tightened, with prescribed tightening force, in the reduced-diameter deformation part; as a result, loosening or falling away *of* the screw tool with respect to the fastener caused by vibration or other fluctuations can be assuredly prevented.

Furthermore, when the loosening preventive fastener for screw tool of the present invention is used in conventional screw tightening operations, tightening with a comparatively large torque when subjecting the screw tool to final tightening will not be required. In other words, in screw tightening operations, when the external threads of the screw tool reach the reduced-diameter deformation part of the fastener, pressure tightening will be done with the prescribed tightening force, and effectiveness at this time in preventing loosening or falling away of the screw tool with respect to the fastener will be exhibited. As a consequence, with use of the loosening preventive fastener for screw tool of the present invention, when the fastener is attached to plastic boards or the like of low strength, final tightening of the screw tool with excessive tightening torque can be avoided, and damage to the boards and associated ill effects on the periphery thereof can be assuredly prevented.

Furthermore, the greatest merits of the loosening preventive fastener for screw tool of the present invention are that it is possible to repeatedly use the fastener together with a screw tool used therewith; and in this case, moreover, the tightening force and pressure tightening effects distinctive to the present invention can be sustained without deterioration, and loosening and falling away of the screw tool with respect to the fastener can be assuredly prevented, making the invention advantageous both economically and in terms of workability.

According to the method for manufacturing the loosening preventive fastener for screw tool of the present invention, the structure is simple, and as a result, many outstanding advantages are obtained including that it is possible to manufacture fasteners *in* a wide range of types, from things of large dimension down to those which are made very small or very fine and precision-machined, and that it is possible to realize low-cost manufacturing by mass production by, for example, using the rolling dies conventionally used in the manufacture of screws and the like.

According to the combination of the loosening preventive fastener for screw tool and a screw tool which is a utilization method, the friction force and viscous force of the external thread portion of the screw tool are added to the tightening force and pressure tightening action resulting from the reduced-diameter deformation part of the fasteners, so that extremely good loosening preventive effectiveness can be exhibited.

### Best Modes for Carrying Out the Invention

Next, embodiments of the loosening preventive fastener for screw tool, manufacturing method, and manufacturing apparatus thereof will be described in detail with reference to the accompanying drawings.

### Embodiment 1

### (Configuration of loosening preventive fastener for screw tool)

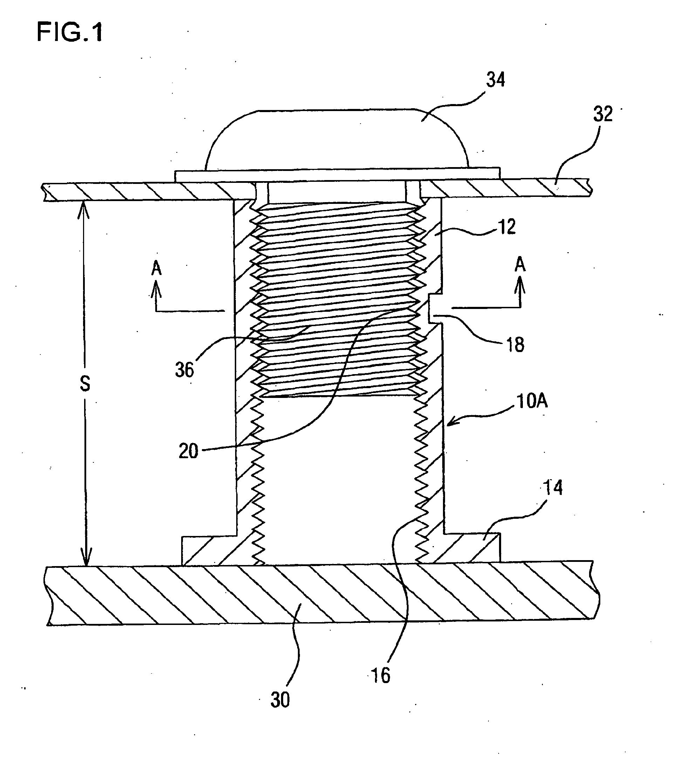

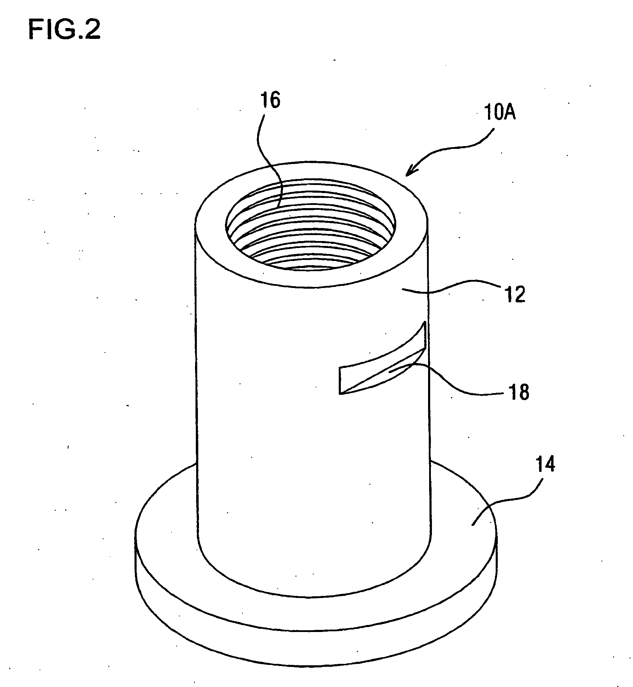

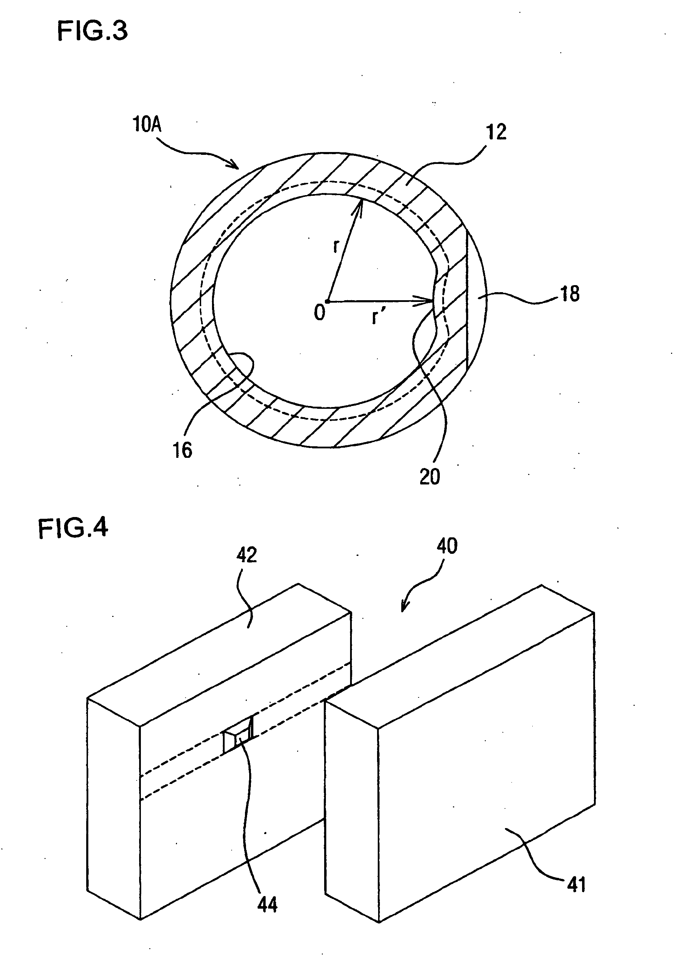

Figs. 1 to 3 show one aspect of a loosening preventive fastener for screw tool which is not in accordance with the invention. Fig. 1 is a vertical cross-sectional view of the main portion of the loosening preventive fastener of this embodiment which shows the state that a screw tool is fastened to the fastener. Fig. 2 is a perspective view of the fastener of this embodiment. Fig. 3 is a cross-sectional view of the main portion taken along the line A-A of the fastener shown in Fig. 1.

In Fig. 1, the reference symbol 10A designates the fastener according to this embodiment. The fastener 10A is one that is used as an insert when an attaching board 32 is secured, as a cover board, to an attachment object 30, which is an integrated circuit board, with a prescribed intervening space S in between, and the fastener 10A is to secure this space S. Accordingly, the fastener 10A configured and deployed in this manner comprises, as shown in Fig. 2, a flange 14, which is provided at one end of a cylindrical main body 12 for securing to the attachment object 30, and internal threads 16, which are for properly screwing together with the external threads 36 of a screw tool 34 (see Fig. 1) and cut into the inner circumferential surface of the cylindrical main body 12.

The fastener 10A according to this embodiment, configured in this manner, is formed with a concavity 18 that is pressure-formed, from the outside, and provided in a part of the outer circumferential wall, at a substantially intermediate place, of the cylindrical main body 12 of the fastener 10A, and a reduced-diameter deformation part 20 in which the diameter of the crests or roots of the internal threads 16 in that part 20 in the inner circumferential wall of the fastener 10A is partially reduced is provided. More specifically, as shown in Fig. 3, the diameter of the crests of the internal threads 16 (the same being true of the roots thereof) in the inner circumferential wall in the reduced-diameter deformation part 20 of the fastener 10A is set so that the radius r' of the reduced-diameter deformation part 20 relative to the prescribed radius r is made smaller (r > r').

When a prescribed screw tool 34 is screwed together with the fastener 10A of this embodiment configured in this manner, the external threads of the screw tool 34 will be pressure-tightened with prescribed tightening force at the reduced-diameter deformation part 20 of the fastener 10A, so that loosening or falling away, of the screw tool 34 with respect to the fastener 10A, caused by vibration or other fluctuations, can be assuredly prevented. In this case, furthermore, in order to effectively manifest the effectiveness of stopping loosening of the screw tool 34 screwed to the fastener 10A, the position of the concavity 18 provided by being pressure-formed, from the outside, in the cylindrical main body 12 of the fastener 10A should preferably be set so that it is at an intermediate place of the screw tool 34 that is screwed together with the fastener 10A.

### (Fastener Manufacturing Method)

Fig. 4 represents one embodiment of a manufacturing method for the fastener 10A according to this embodiment. More specifically, when manufacturing the fastener 10A of this embodiment comprising the above-described configuration, rolling dies 40 which are commonly used in the manufacture of screws and the like can be used as the pressing means for forming the concavity 18 in one part of the outer circumferential wall, at a substantially intermediate place, of the cylindrical main body 12 of the fastener 10A, from the outside thereof. In other words, as shown in Fig. 4, a convexity 44, for forming the concavity 18, is formed on one of the dies of the rolling dies 40 that include a stationary die 41 and a moving die 42, namely on the moving die 42; and with use of the rolling dies 40 having this convexity 44, the concavity 18 can be simply pressure-formed *in* a part of the outer circumferential wall of the fastener 10A in a similar way as when manufacturing a conventional screw or the like.

As an alternative proposal, furthermore, it is also possible to form, from the outside, the same concavity 18 as described above, *in* a part of the outer circumferential wall at a substantially intermediate place in the cylindrical main body 12 of the fastener 10A by using a pressing [0045] means such as an ordinary punch instead of the rolling dies 40.

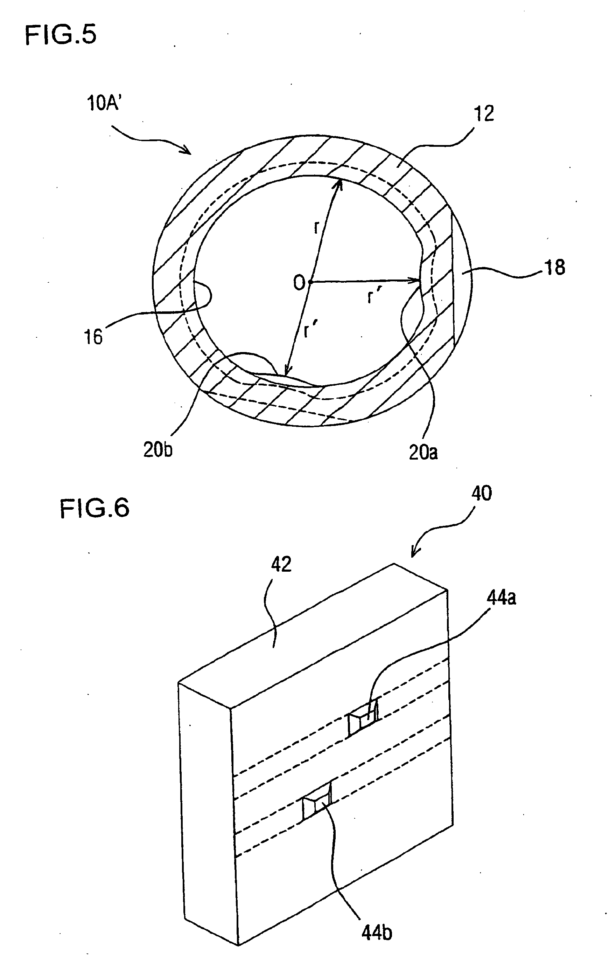

Figs. 5 and 6 represent a modification example of the fastener 10A and manufacturing method therefor described above. More specifically, in the fastener 10A' of this embodiment in accordance with the invention, as shown in Fig. 5, a plurality of concavities 18 (at two locations in the example shown) is respectively provided *in* the outer circumferential wall of the cylindrical main body 12 with displacements being made both in the axial direction and in the circumferential direction of the fastener 10A', so that a plurality of reduced-diameter deformation parts 20a and 20b are provided, respectively, in the inner circumferential wall in which the internal threads 16 are formed. Accordingly, when manufacturing the fastener 10A' configured in this manner, convexities 44a and 44b are as shown in Fig. 6, formed in one of the dies in the rolling dies 40, namely in the moving die 42, for forming the plurality of concavities 18; and with use of the dies 40 having the convexities 44a and 44b, it is possible to simply pressure-form the plurality of concavities 18 *in* parts of the outer circumferential wall of the fastener 10A', in a similar manner as described above. Thus, by increasing the established number of the concavities 18 to a plurality of numbers, that is, to two or greater, the functioning as a loosening preventive fastener for screw tool can be appropriately enhanced.

According to the fasteners 10A and 10A' of this embodiment, as described above, not only can ordinary screw tool be used for the screw tool 34; however, when mating the screw tool and the fastener, neither is damaged, and as a result, both the screw tool and the fastener can be reused. In addition, because the structure is simple, many outstanding advantages are obtained, including that it is possible to manufacture fasteners in a wide range of types, from things of large dimension down to those which are made very small or very fine and precision-machined, and that it is possible to realize low-cost manufacturing by mass production

### Embodiment 2

### (Configuration of loosening preventive fastener for screw tool)

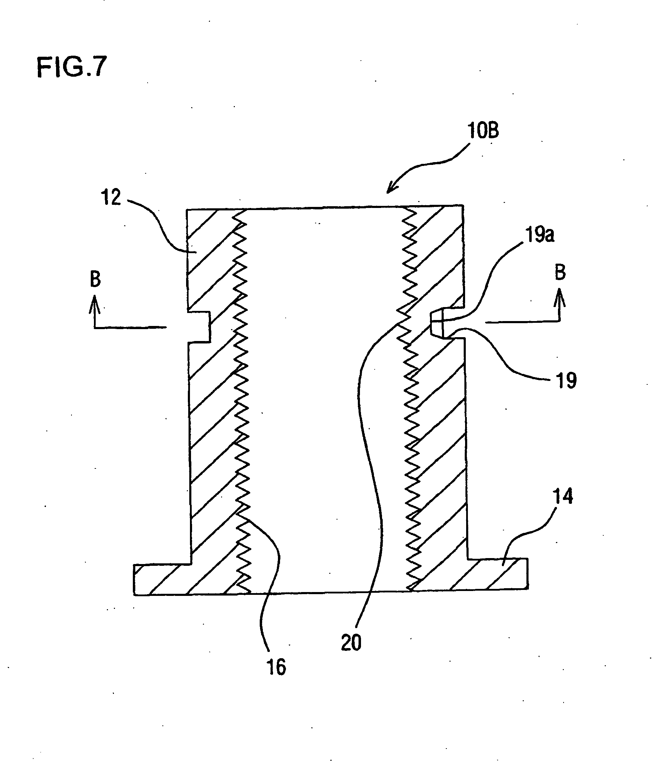

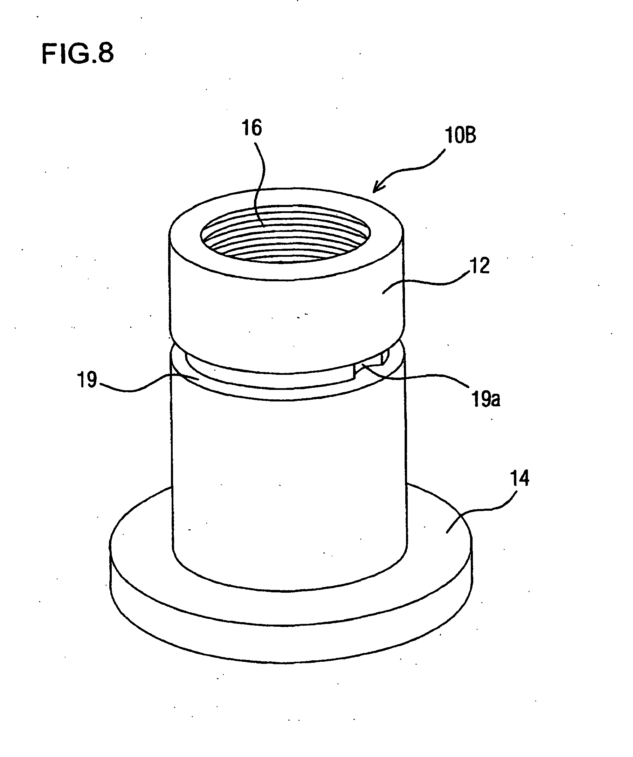

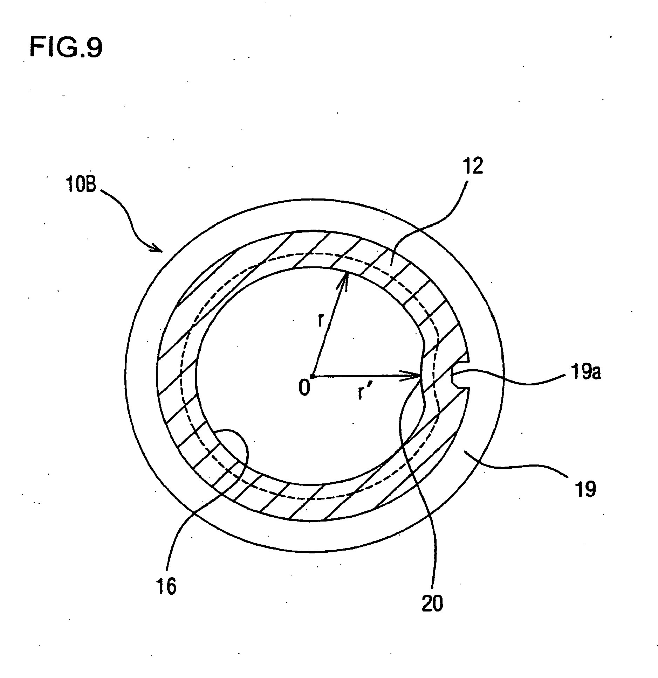

Figs. 7 to 9 show another embodiment of a loosening preventive fastener for screw tool according to the present invention. Fig. 7 is a vertical cross-sectional view of the main portion of the loosening preventive fastener of this embodiment. Fig. 8 is a perspective view of the fastener of this embodiment. Fig. 9 is a cross-sectional view of the main portion taken along the line B-B of the fastener shown in Fig. 7. To facilitate the description, furthermore, the same reference symbols are applied to component parts that are the same as those in the fastener of embodiment 1 described above.

In Fig. 7, the reference symbol 10B designates a fastener according to this embodiment. This fastener 10B is a fastener that functions as an insert, similar to the above-described embodiment 1; however, the cylindrical main body 12 of the fastener is configured so as to be materially thick. Accordingly, the fastener 10B in this manner has, as shown in Fig. 8, a flange 14 provided at one end of the cylindrical main body 12 for securing to the attachment object 30, and internal threads 16 for properly screwing together with the external threads 36 of the screw tool 34 (see Fig. 1) are cut into the inner circumferential surface of the cylindrical main body 12.

The fastener 10B according to this embodiment is configured such that a thinly formed portion 19, made thinner for a constant width in the circumferential direction, is provided in one part of the outer circumferential wall, at a substantially intermediate place, on the cylindrical main body 12 of the fastener 10B, and a concavity 19a is provided by being pressure-formed, from the outside, in at least a part of the thinly formed portion 19. As a result, a reduced-diameter deformation part 20 in which the diameter of the crests or roots of the internal threads 16 in the inner circumferential wall of the fastener 10B is partially reduced is provided. More specifically, as shown in Fig. 9, the diameter of the crests of the internal threads 16 (the same being true of the roots thereof) in the inner circumferential wall of the fastener 10B is set so that the radius r' of the reduced-diameter deformation part 20 relative to the prescribed radius r is made smaller (r > r'). When prescribed screw tool 34 is screwed together with the fastener 10B configured in this manner, the external threads of the screw tool 34 will be pressure-tightened with prescribed tightening force at the reduced-diameter deformation part 20 of the fastener 10B, so that loosening or falling away of the screw tool 34 with respect to the fastener 10B, caused by vibration or other fluctuations, can be assuredly prevented.

### (Fastener Manufacturing Method)

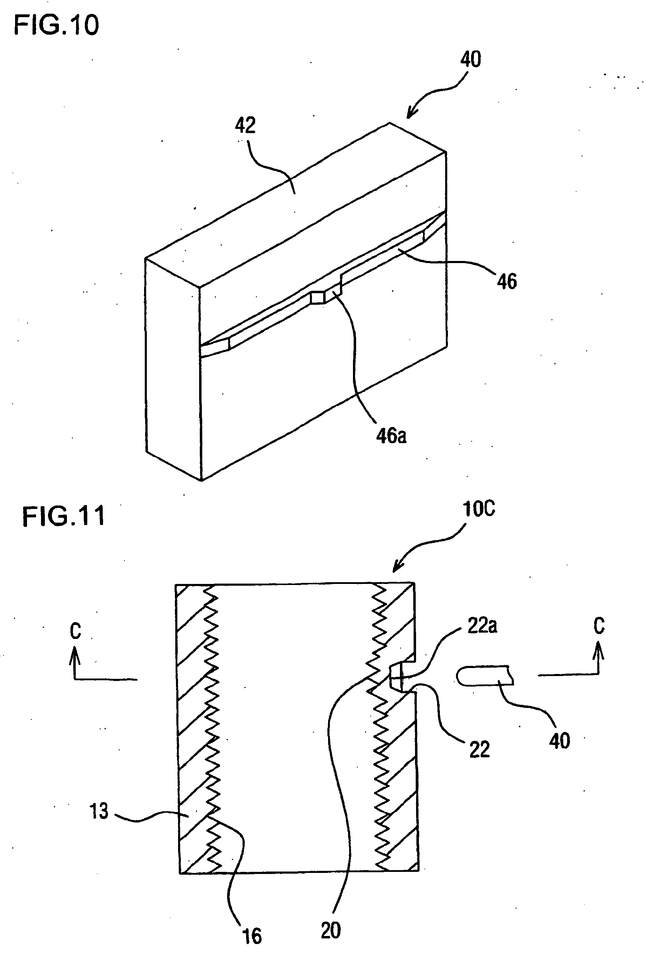

Fig. 10 represents one embodiment of a manufacturing method for the fastener 10B according to this embodiment. More specifically, when manufacturing the fastener 10B of this embodiment that comprises the above-described configuration, rolling dies 40 which are commonly used in the manufacture of screws and the like can be used as a pressing means for forming, from the outside, the thinly formed portion 19, which is thinner than other parts for a constant width in the circumferential direction, and the concavity 19a in one part of the outer circumferential wall, at a substantially intermediate place, on the cylindrical main body 12 of the fastener 10B. In other words, as shown in Fig. 10, a protruding ledge 46 for forming the thinly formed portion 19 and a convexity 46a for forming the concavity 19a are formed on one of the dies of the rolling dies 40 that include a stationary die 41 and a moving die 42, namely on the moving die 42; and with use of the rolling dies 40 having the protruding ledge 46 and convexity 46a, the thinly formed portion 19 and the concavity 19a can be simply pressure-formed in a part of the outer circumferential wall of the fastener 10B in a similar way as when manufacturing a conventional screw or the like.

With the fastener 10B of this embodiment as well, as described above, not only can ordinary screw tool be used for the screw tool 34; however, when mating the screw tool and the fastener, neither is damaged, and as a result, both the screw tool and the fastener can be reused. In addition, because the structure is simple, many outstanding advantages are obtained including that it is possible to manufacture fasteners *in* a wide range of types, from things of large dimension down to those which are made very small or very fine and precision-machined, and that it is possible to realize low-cost manufacturing by mass production.

### Embodiment 3

### (Configuration of loosening preventive fastener for screw tool)

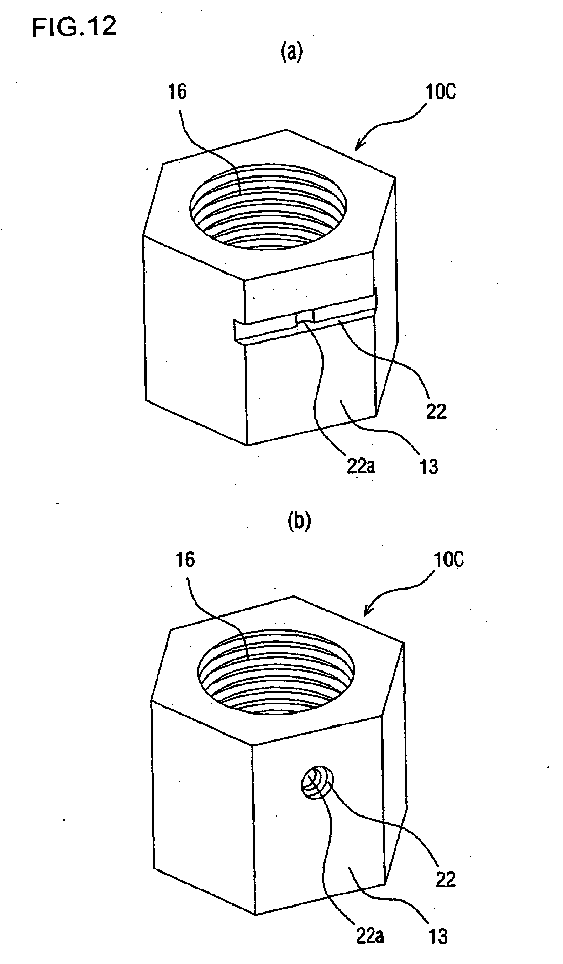

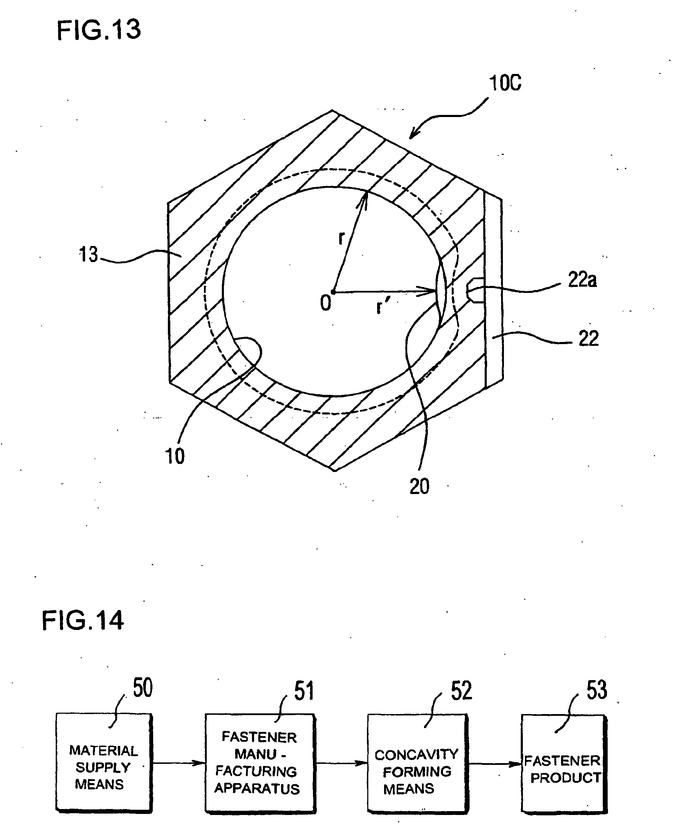

Figs. 1 to 13 show yet another embodiment of a loosening preventive fastener for screw tool which is not in accordance with the invention Fig. 11 is a vertical cross-sectional view of the main portion of the loosening preventive fastener of this embodiment. Fig. 12 is a perspective view of the fastener of this embodiment. Fig. 13 is a cross-sectional view of the main portion taken along the line C-C of the fastener shown in Fig. 11. To facilitate the description, furthermore, the same reference symbols are applied to constituting elements that are the same as those in the fastener of embodiment 1 described above.

In Figs. 11 and 12, the reference symbol 10C designates a fastener according to this embodiment. This fastener 10C is a fastener configured as a hexagonal nut. In the inner circumferential surface of this hexagonal nut main body 13 of the fastener 10C, internal threads 16 are cut for properly screwing together with the external threads of the screw tool shown in Fig. 1, for example.

The fastener 10C according to this embodiment is configured such that a thinly formed portion 22 is provided in one part of the outer circumferential wall, at a substantially intermediate place, on the hexagonal nut main body 13, by cutting machining or the like, from the outside, so that a concavity 22a is formed, in at least one part of this thinly formed portion 22, by being pressure-formed, from the outside, with a punch or the like 40. As a result, a reduced-diameter deformation part 20 in which the diameter of the crests or roots of the internal threads 16 in the inner circumferential wall of the fastener 10C is partially reduced is provided.

### (Fastener Manufacturing Method)

Accordingly, in the fastener 10C according to this embodiment configured in this manner, as shown in Fig. 12(a), the thinly formed portion 22 is formed on one side of the outer circumferential wall, at a substantially intermediate place, on the hexagonal nut main body 13, by performing cutting machining in the shape of a linear channel having a prescribed width, and then by pressing, from the outside, with a punch or the like 40 at least one place in the thinly formed portion 22 formed in this manner, the above-described concavity 22a is formed.

As an alternative proposal, as shown in Fig. 12(b), it is also possible to form the thinly formed portion 22 by performing machining to cut a circular hole having a prescribed diameter in the center part on one side of the outer circumferential wall, at a substantially intermediate place on the hexagonal nut main body 13, and then by pressure-forming, with a punch or the like 40, from the outside, at least one part of the thinly formed portion 22 formed in this manner, the above-described concavity 22a is formed.

Accordingly, in the fastener 10C of this embodiment manufactured in this manner, as shown in Fig. 13, the diameter of the crests of the internal threads 16 (the same being true of the roots thereof) in the inner circumferential wall of the fastener 10C is set so that the radius r' of the reduced-diameter deformation part 20 relative to the prescribed radius r is made smaller (r > r'). When prescribed screw tool is screwed together with the fastener 10C configured in this manner, the external threads of the screw tool will be pressure-tightened with prescribed tightening force at the reduced-diameter deformation part 20 of the fastener 10C, so that loosening or falling away *of* the screw tool *with respect to the* fastener 10C, caused by vibration or other fluctuations, can be assuredly prevented.

With the fastener 10C of this embodiment as well, as described above, ordinary screw tool can be used for the screw tool 34; and, when mating the fastener and the screw tool together, neither is damaged, and as a result, it is possible to reuse both the screw tool and the fastener. In addition, because the structure is simple, many outstanding advantages are obtained including that it is possible to manufacture fasteners *in* a wide range of types, from things of large dimension down to those which are made very small or very fine and precision-machined, and that it is possible to realize low-cost manufacturing by mass production.

### Embodiment 4

### (Apparatus for manufacturing a loosening preventive fastener for screw tool)

Fig. 14 is a simplified illustration of the structure of a manufacturing apparatus for continuously manufacturing the loosening preventive fastener for screw tool 10A, 10A', and 10B described above. More specifically, when manufacturing the fasteners a product 53 can be finished as a loosening preventive fastener for screw tool by: a fastener material supply means 50; a fastener manufacturing apparatus 51 for continuously manufacturing fasteners such as nuts or inserts; and a concavity forming means 52 including rolling dies for forming a concavity by pressure forming, from the outside, at a part of the outer circumferential wall of the fastener and forming a reduced-diameter deformation part in which the diameter of the crests or roots of the internal threads in the inner circumference wall of the fastener is partially deformed to be reduced. ,

### Embodiment 5

### (Examples of use of loosening preventive fastener for screw tool)

The loosening preventive fastener for screw tools according to the embodiments described above of the present invention can be used in combinations with ordinary screw tool that is generally commercially marketed; and in such a use, the screw tool loosening preventive effects distinctive to the present invention, as described above, can be effectively and definitely manifested.

In particular, it is possible to use the fastener of the invention in combinations with generally commercially marketed screw tool in which the external thread portion is coated with a resin or the like to prevent loosening and falling away. In such cases, the friction force and viscous force and the like of the external thread portion are added to the tightening force and tightening action effected by the reduced-diameter deformation part of the fasteners, so that extremely good loosening preventive effects can be manifested.

### Brief Description of the Drawings

Fig. 1 is a vertical cross-sectional view of the main portion of a loosening preventive fastener for screw tool according to one embodiment, showing the state that a screw tool is fastened to the fastener.
Fig. 2 is a perspective view of the fastener shown in Fig. 1:
Fig. 3 is a cross-sectional view of the main portion taken along the line A-A of the fastener shown in Fig. 1.
Fig. 4 is a simplified explanatory illustration representing an embodiment of rolling dies for manufacturing the loosening preventive fastener for screw tool shown in Fig. 1.
Fig. 5 is a cross-sectional view of the main portion, similar to Fig. 3, representing a modification example of a loosening preventive fastener for screw tool according to the present invention.
Fig. 6 is a simplified explanatory illustration representing another embodiment of rolling dies for manufacturing the loosening preventive fastener for screw tool according to the present invention shown in Fig. 5.
Fig. 7 is a vertical cross-sectional view of the main portion of another embodiment of a loosening preventive fastener according to the present invention.
Fig. 8 is a perspective view of the loosening preventive fastener for screw tool according to the present invention shown in Fig. 7.
Fig. 9 is a cross-sectional view of the main portion taken along the line B-B of the loosening preventive fastener for screw tool according to the present invention shown in Fig. 7.
Fig. 10 is a simplified explanatory illustration representing an embodiment of rolling dies for manufacturing the loosening preventive fastener for screw tool according to the present invention shown in Fig. 7.
Fig. 11 is a vertical cross-sectional view of the main portion representing yet another embodiment of a loosening preventive fastener.
Fig. 12(a) is a perspective view of an example structure of the loosening preventive fastener for screw tool, and 12(b) is a perspective view of another example structure of the loosening preventive fastener for screw tool.
Fig. 13 is a cross-sectional view of the main portion taken along the line C-C of the loosening preventive fastener for screw tool shown in Fig. 11.
Fig. 14 is a block diagram showing a manufacturing apparatus for continuously manufacturing loosening preventive fastener for screw tools.

### Explanation of Symbols

- 10A, 10A': fasteners (inserts)
- 10B: fastener (thin insert)
- 10C: fastener (hexagonal nut)
- 12: cylindrical main body
- 13: hexagonal nut main body
- 14: flange
- 16: internal threads
- 18: concavity (formed by pressure forming)
- 19: thinly formed portion (formed by pressure forming)
- 19a: portion pressure-formed
- 20: reduced-diameter deformation part
- 20a, 20b: reduced-diameter deformation parts
- 22: thinly formed portion ([made] by cutting machining)
- 22a: portion pressure-formed
- 30: attachment object
- 32: attaching board
- 34: screw tool
- 36: external threads
- 40: rolling dies
- 41: stationary die
- 42: moving die
- 44: convexity
- 44a, 44b: convexities
- 46: protruding ledge
- 46a: convexity
- 50: material supply means
- 51: fastener manufacturing apparatus
- 52: concavity forming means (for forming reduced-diameter deformation part)
- 53: fastener product
- S: space

## Claims

1. A loosening preventive fastener (10A') for a screw tool, said fastener being an insert or spacer for making fastening with a screw tool (34), wherein said fastener comprises a configuration in which a plurality of concavities (18) provided to an outer circumferential wall at a substantially intermediate place of a cylindrical main body (12) of said fastener are spaced respectively at positions being displaced both in an axial direction and in a circumferential direction of the cylindrical main body (12) of said fastener and are formed by the use of rolling dies (40) in which a plurality of convexities (44a, 44b) are provided on one side surface of one moving die (42) to cause said plurality of concavities (18) to be provided respectively in the cylindrical main body (12) of said fastener, thereby forming a plurality of reduced-diameter deformation parts (20a, 20b), in which a diameter of crests or roots of internal threads (16) in an inner circumferential wall of said fastener is partially reduced at positions being displaced both in the axial direction and in the circumferential direction.

2. A loosening preventive fastener (10B) for a screw tool, said fastener being an insert or spacer for making fastening with a screw tool (34), wherein said fastener comprises a configuration in which a thinly formed portion (19) and a concavity (19a) provided in at least a part of said thinly formed portion to an outer circumferential wall at a substantially intermediate place of a cylindrical main body (12) of said fastener, said thinly formed portion being of prescribed width and made thinner across an entire circumference of the outer circumferential wall, are formed by the use of rolling dies (40), in which a protruding ledge (46) and a convexity (46a) are provided on one side surface of one moving die (42) to cause said thinly formed portion (19) and the concavity (19a) to be provided in the cylindrical main body (12) of said fastener, thereby forming a reduced-diameter deformation part (20) in which a diameter of crests or roots of internal threads (16) in an inner circumferential wall of said fastener is partially reduced.

## Patentansprüche

1. Löseverhinderungsbefestiger (10A') für ein Schraubwerkzeug, wobei der Befestiger ein Einsatz oder Abstandsstück zum Befestigen mit einem Schraubwerkzeug (34) ist, wobei der Befestiger einen Aufbau aufweist in dem mehrere Konkavitäten (18), vorgesehen an einer äußeren Umfangswand an einer im Wesentlichen intermediären Stelle eines zylindrischen Hauptkörpers (12) des Befestigers, entsprechend an Positionen beabstandet sind, die sowohl in einer Axialrichtung als auch einer Umfangsrichtung des zylindrischen Hauptkörpers (12) des Befestigers versetzt sind und unter Verwendung von Walzformen (40) ausgebildet sind, in denen mehrere Konvexitäten (44a, 44b) auf einer Fläche einer beweglichen Form (42) vorgesehen sind, um zu bewirken, dass die mehreren Konkavitäten (18) entsprechend in dem zylindrischen Hauptkörper (12) des Befestigers vorgesehen werden, wodurch mehrere Verformungsteile mit reduziertem Durchmesser (20a, 20b) ausgebildet werden, in denen ein Durchmesser von Spitzen und Gründen von Innengewinden (16) in einer inneren Umfangswand des Befestigers an Positionen, die sowohl in der Axialrichtung als auch der Umfangsrichtung versetzt sind, teilweise reduziert ist.

2. Löseverhinderungsbefestiger (10B') für ein Schraubwerkzeug, wobei der Befestiger ein Einsatz oder Abstandsstück zum Befestigen mit einem Schraubwerkzeug (34) ist, wobei der Befestiger einen Aufbau aufweist in dem ein dünn ausgebildeter Abschnitt (19) und eine Konkavität (19a) vorgesehen in zumindest einem Teil des dünn ausgebildeten Abschnitts an einer äußeren Umfangswand an einer im Wesentlichen intermediären Stelle des zylindrischen Hauptkörpers (12) des Befestigers, wobei der dünn ausgebildete Abschnitt eine vorgeschriebene Breite aufweist und dünner über den gesamten Umfang der äußeren Umfangswand ausgeführt ist, unter Verwendung von Walzformen (40) ausgebildet sind, in denen ein vorstehender Absatz (46) und ein Konvexität (46a) an einer Seitenfläche einer beweglichen Form (42) vorgesehen sind, um zu bewirken, dass der dünn ausgebildete Abschnitt (19) und die Konkavität (19a) in dem zylindrischen Hauptkörper (12) des Befestigers vorgesehen werden, wodurch ein Verformungsteil mit reduziertem Durchmesser (20) ausgebildet wird, in dem ein Durchmesser von Spitzen und Gründen von Innengewinden (16) in einer inneren Umfangswand des Befestigers teilweise reduziert ist.

## Revendications

1. Attache anti-relâchement (10A') pour un outil à vis, ladite attache étant un insert ou une entretoise destiné(e) à effectuer la fixation avec un outil à vis (34), dans laquelle ladite attache comprend une configuration dans laquelle une pluralité de concavités (18) prévues sur une paroi circonférentielle extérieure à un endroit substantiellement intermédiaire d'un corps principal cylindrique (12) de ladite attache sont espacées respectivement à des positions étant déplacées à la fois dans une direction axiale et dans une direction circonférentielle du corps principal cylindrique (12) de ladite attache et sont formées par l'utilisation de matrices de laminage (40) dans lesquelles une pluralité de convexités (44a, 44b) sont prévues sur une surface latérale d'une matrice mobile (42) pour amener ladite pluralité de concavités (18) à être prévues respectivement dans le corps principal cylindrique (12) de ladite attache, formant ainsi une pluralité de parties de déformation de diamètre réduit (20a, 20b), où un diamètre de crêtes ou de creux des filetages internes (16) dans une paroi circonférentielle interne de ladite attache est partiellement réduit à des positions étant déplacées à la fois dans la direction axiale et dans la direction circonférentielle.

2. Attache anti-relâchement (10B) pour un outil à vis, ladite attache étant un insert ou une entretoise pour effectuer la fixation avec un outil à vis (34), dans laquelle ladite attache comprend une configuration dans laquelle une partie formée de façon mince (19) et une concavité (19a) prévue dans au moins une portion de ladite partie formée de façon mince sur une paroi circonférentielle externe à un endroit substantiellement intermédiaire d'un corps principal cylindrique (12) de ladite attache, ladite partie formée de façon mince étant d'une largeur prescrite et rendue plus mince sur une circonférence entière de la paroi circonférentielle externe, sont formées par l'utilisation de matrices de laminage (40), où un rebord saillant (46) et une convexité (46a) sont prévus sur une surface latérale d'une matrice mobile (42) pour amener ladite partie formée de façon mince (19) et la concavité (19a) à être prévues dans le corps principal cylindrique (12) de ladite attache, formant ainsi une partie de déformation de diamètre réduit (20) dans laquelle un diamètre de crêtes ou de creux des filetages internes (16) dans une paroi circonférentielle interne de ladite attache est partiellement réduit.
